# EUROPÄISCHE PATENTANMELDUNG

(11) **EP 1 712 446 A1**
(43) Veröffentlichungstag der Anmeldung: **18.10.2006**
(21) Anmeldenummer: 06003000.4
(22) Anmeldetag: 15.02.2006
(51) Int. Cl.: B62D 1/02, B62D 5/00

(54) **Lenkgeberanordnung für eine elektrische Lenkung eines Flurförderzeuges**

(30) Priorität: 15.04.2005 DE 102005017439
(71) Anmelder: Jungheinrich Aktiengesellschaft, 22047 Hamburg (DE)
(72) Erfinder: Mänken, Frank, Dr. Ing., 24558 Henstedt-Ulzburg (DE); Schröder, Henkrik, Dipl.-Ing., 214523 Winsen-Roydorf (DE)
(74) Vertreter: Hauck, Graalfs, Wehnert, Döring, Siemons

(57) **Zusammenfassung**

Lenkgeberanordnung für eine elektrische Lenkung eines Flurförderzeuges, bei der ein Lenkelement mit einer Nabe (10) verbunden ist, die drehbar an einem fahrzeugfesten Lagerbauteil (18) gelagert ist und bei der eine Dämpfungsvorrichtung zwischen Lagerbauteil (18) und Nabe (10) angeordnet ist, wobei die Nabe (10) oder das Lagerbauteil (18) mit einem Getriebeabschnitt versehen ist, der mit einem Ritzel (30) eines Drehdämpfers (28) in Triebverbindung steht und der Drehdämpfer (28) seinerseits im Lagerbauteil (18) oder in der Nabe (10) versetzt zur Drehachse der Nabe (10) festgelegt ist.

## Beschreibung

Die Erfindung bezieht sich auf eine Lenkgeberanordnung für eine elektrische Lenkung eines Flurförderzeuges nach dem Oberbegriff des Patentanspruchs 1.

Es ist bekannt, Flurförderzeuge mit einem elektrischen oder elektrohydraulischen Lenksystem auszurüsten. Der Lenkgeber, beispielsweise ein Lenkrad, ein Joystick oder dergleichen ist mit einem zumeist elektrischen Winkelgeber verbunden, der ein drehwinkelabhängiges elektrisches Signal erzeugt, das auf einen Lenkantrieb für mindestens ein zu lenkendes Rad gegeben wird. Elektrische Lenkgeber können sehr leichtgängig sein, was bei Verwendung einer Positionsregelung dazu führt, daß der Fahrer schneller lenken kann als die Aktorik das gelenkte Rad tatsächlich bewegt. Dies führt zu einem indirekten Lenkgefühl, und die Fahrzeugbewegungen werden leicht unkontrollierbar.

Um den beschriebenen Effekt zu vermeiden, ist bekannt, sogenannte Force-Feedback-Einrichtungen zu verwenden, die eine Gegenkraft auf das Lenkrad aufbringen und so das zu schnelle Drehen des Lenkrades verhindern. Eine derartige Technik ist jedoch relativ aufwendig.

Es ist ferner bekannt, die Bewegung leichtgängiger Lenkräder durch eine Reibungsbremse schwergängiger zu machen. Eine Reibungsbremse erzeugt ein weitgehend konstantes, nur minimal drehgeschwindigkeitsabhängiges Bremsmoment. Der Fahrer muß daher bei jeder Drehbewegung des Lenkrades die gleiche Kraft aufbringen. Dadurch wird ein zu schnelles Drehen des Lenkrades nicht wirksam genug verhindert. Außerdem besteht bei Reibungsbremsen das Problem des Übergangs zwischen höherer Haftreibung und niedriger Gleitreibung, wodurch zum Bewegen des Lenkrades zunächst ein gewisses Losbrechmoment überwunden werden muß, das naturgemäß höher ist, als das Bremsmoment bei konstanter Drehung des Lenkrades. Um einen solchen Effekt zu verhindern, ist aus DE 199 01 451 C3 für eine Deichsellenkung bekannt geworden, die Reibflächen einer Reibungsbremse mit Silikonfett zu schmieren. Um bei einem Automobil Vibrationen im Lenkrad zu vermeiden bzw. zu dämpfen ist aus JP 01153379 A bekannt geworden, mit der Lenkwelle eines Lenkrades einen Drehdämpfer zu koppeln. Auf der Welle sitzen koaxial mehrere Scheiben, die zwischen koaxialen Ringscheiben angeordnet sind, die ihrerseits mit der fahrzeugfesten Innenwandung eines Gehäuses verbunden sind, in den ein viskoses Dämpfungsmittel eingeschlossen ist. Ein derartiger Drehdämpfer hat den Vorteil, daß die viskose Reibung stark von der Relativgeschwindigkeit abhängig ist. Langsame Drehbewegungen werden kaum oder wenig gedämpft, und mit zunehmender Drehgeschwindigkeit steigt die Dämpfungskraft.

Der Erfindung liegt die Aufgabe zugrunde, für eine elektrische Lenkung eines Flurförderzeuges eine einfach aufgebaute Dämpfung für eine Lenkgeberanordnung zu schaffen, insbesondere für Lenkgeber mit sehr kleinem Drehwinkel.

Diese Aufgabe wird durch die Merkmale des Patentanspruchs 1 gelöst.

Bei der erfindungsgemäßen Lenkgeberanordnung ist die Nabe oder das Lagerbauteil mit einem Getriebeabschnitt versehen, der mit einem Ritzel eines Drehdämpfers in Triebverbindung steht, und der Drehdämpfer ist seinerseits im Lagerbauteil oder in der Nabe versetzt zur Drehachse der Nabe festgelegt.

Drehdämpfer sind für die verschiedensten Anwendungen im Automobilbau oder auch in der Möbelindustrie bekannt, um die Bewegung von Teilen in beiden oder nur in einer Richtung zu dämpfen. Sie weisen ein zumeist zylindrisches Gehäuse auf, in dem ein Rotor drehbar gelagert und ein viskoses Dämpfungsmedium, insbesondere Silikonöl, eingeschlossen ist. Die mit dem Rotor verbundene Welle ist an einem Ende herausgeführt und mit einem Ritzel versehen. Bei der Erfindung kann ein derartiger Drehdämpfer zur Anwendung kommen. Seine Anordnung hat den Vorteil, daß ein relativ kleiner Drehdämpfer eingesetzt werden kann, um eine wirksame Dämpfung herbeizuführen, da die Übersetzung so gewählt werden kann, daß auch ein kleiner Drehwinkel des Lenkgebers zu einer ausreichenden Rotation des Drehdämpfers führt und eine wirksame Dämpfung herbeiführt.

Die Triebverbindung zwischen der Nabe und dem Ritzel bzw. dem Lagerbauteil und dem Ritzel kann beispielsweise über einen Zahnriemenantrieb oder dergleichen erfolgen. Es ist nach einer Ausgestaltung der Erfindung vorteilhaft, wenn der Getriebeabschnitt von einer kreisförmigen Zahnung gebildet ist, welche mit dem Ritzel des Drehdämpfers kämmt.

Für die Wirksamkeit der Dämpfung ist es gleich, ob der Drehdämpfer mit der Nabe oder dem Lagerbauteil verbunden ist. Vorzuziehen ist die Anordnung des Drehdämpfers in einem scheibenförmigen Abschnitt des Lagerbauteils. Die Zahnung, die in diesem Fall in der Nabe ausgebildet ist, ist vorzugsweise einteilig mit der aus Kunststoff geformten Nabe geformt.

Die erfindungsgemäße Lenkgeberanordnung ist vorzugsweise auf Lenksysteme anwendbar, bei denen der Drehwinkel der Nabe auf kleiner als 360° begrenzt ist, vorzugsweise auf 100° zu beiden Seiten der Neutralstellung. Die Neutralstellung bedeutet hier Geradeausfahrt.

Nach einer anderen Ausgestaltung der Erfindung ist zwischen Nabe und Lagerbauteil eine Federanordnung angeordnet, durch die die Nabe in die Neutralstellung, d. h. Geradeausfahrt, vorgespannt ist. Bei einer weiteren Ausgestaltung der Erfindung ist eine einzelne koaxial zur Drehachse angeordnete Schraubenfeder vorgesehen, deren Schenkelenden mit einem Vorsprung des Lagerbauteils zusammenwirken, wobei die Nabe einen Mitnehmerabschnitt aufweist, der je nach Drehrichtung der Nabe mit einem der Schenkelenden zusammenwirkt und die Feder tordiert.

Die erfindungsgemäße Lenkgeberanordnung kann für die verschiedensten Flurförderzeuge, wie Niederhubkommissionierer, Niederhubwagen mit Standplattform, Gegengewichtsstapler oder dergleichen verwendet werden. Außerdem ist eine Verwendung mit weiter reduzierten Lenkwinkel von z. B. 45° zu jeder Seite bei sogenannten Schmalgangstaplern möglich. In diesem Zusammenhang ist in einer Ausgestaltung der Erfindung vorgesehen, daß das Lenkelement bzw. die Nabe in der Neutralstellung blockierbar ausgebildet ist. Eine Blockierung erfolgt, wenn das Fahrzeug im Regalgang fährt.

Ein Ausführungsbeispiel der Erfindung wird nachfolgend anhand von Zeichnungen näher erläutert.
- Fig. 1: zeigt perspektivisch einen Teil der Lenkgeberanordnung mit einer Dämpfung nach der Erfindung.
- Fig. 2: zeigt perspektivisch die gleiche Ansicht wie Fig. 1, wobei jedoch die Nabe fortgelassen ist.

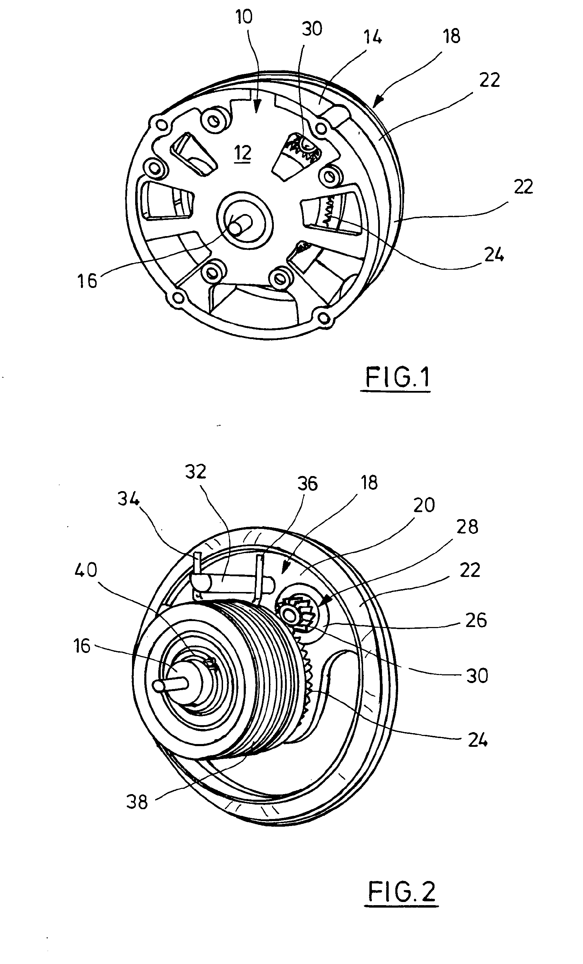

In Fig. 1 ist eine topfförmige Nabe 10 zu erkennen, die etwa mit einem nicht gezeigten Lenkrad eines Flurförderzeuges (ebenfalls nicht gezeigt) fest verschraubt werden kann. Die Nabe 10 weist einen Scheibenabschnitt 12 auf sowie einen Ringflansch 14. Der Scheibenabschnitt 12 ist drehbar auf einem Lagerzapfen 16 angeordnet, der mit einem wesentlichen scheibenförmigen Lagerbauteil 18 fest verbunden ist (nicht zu erkennen). Das Lagerbauteil 18 weist einen Scheibenabschnitt 20 auf und einen äußeren Ringabschnitt 22. Mit dem Scheibenabschnitt 12 der Nabe 10 ist eine ringförmige Zahnung 24 geformt (Die Nabe 10 besteht aus einem Kunststoffmaterial). Die Zahnung ist koaxial zur Drehachse der Nabe 10 auf dem Lagerzapfen 16. Im Scheibenabschnitt 20 des Lagerbauteils 18 ist exzentrisch eine Kreisöffnung geformt, welche ein flachzylindrisches Gehäuse 26 eines Drehdämpfers 28 passend aufnimmt und festlegt. Der Drehdämpfer 28 weist ein Ritzel 30 auf, das auf einer Welle des Drehdämpfers angeordnet ist, auf welcher im Inneren des Gehäuses 26 ein Rotor drehfest angeordnet ist, der mit einem viskosen Medium im Inneren des Gehäuses 26 dämpfend zusammenwirkt, wie an sich bekannt.

Das Ritzel 30 kämmt mit der Zahnung 24 (in Fig. 2 ist die Nabe 12 nicht dargestellt, hingegen aus Darstellungsgründen die Zahnung 24). Bei einer Drehung der Nabe 10 wird daher das Ritzel 30 gedreht, wobei wegen der Übersetzung ein relativ kleiner Drehwinkel der Nabe 10 eine Mehrfachumdrehung des Ritzels 30 verursacht.

Das Lagerbauteil 18 ist in geeigneter Weise fahrzeugfest angebracht (nicht gezeigt). Sein Scheibenabschnitt 20 weist einen achsparallelen Vorsprung 32 auf, der zwischen zwei radial abgebogenen Schenkelenden 34, 36 einer Schraubenfeder 38 angeordnet ist. Die Schraubenfeder 38 ist auf der Welle 16 angeordnet. Mit der Innenseite des Scheibenabschnittes 12 der Nabe 10 (nicht zu erkennen) ist ein Mitnehmervorsprung verbunden, der ebenfalls zwischen den Schenkelenden 34, 36 greift. Wird die Nabe 10 zur einen oder anderen Seite verdreht, nimmt der Mitnehmervorsprung das zugeordnete Schenkelende 34 oder 36 mit und tordiert die Feder 38, wodurch eine Vorspannung des Lenkrades in Richtung Neutralstellung erfolgt. Ein Mitdrehen der Feder 38 wird durch den Vorsprung 32 verhindert.

Ein Federring 40 sichert die Nabe 10 axial auf dem Lagerzapfen 16.

Am scheibenförmigen Abschnitt der Nabe 10 kann ein elektrisches Bauteil angebracht werden, das z. B. mit dem Lagerzapfen 16 einen Winkelgeber realisiert.

## Patentansprüche

1. Lenkgeberanordnung für eine elektrische Lenkung eines Flurförderzeuges, bei der ein Lenkelement mit einer Nabe verbunden ist, die drehbar an einem fahrzeugfesten Lagerbauteil gelagert ist und bei der eine Dämpfungsvorrichtung zwischen Lagerbauteil und Nabe angeordnet ist, **dadurch gekennzeichnet, daß** die Nabe (10) oder das Lagerbauteil mit einem Getriebeabschnitt versehen ist, der mit einem Ritzel (30) eines Drehdämpfers (28) in Triebverbindung steht und der Drehdämpfer seinerseits im Lagerbauteil (18) oder in der Nabe versetzt zur Drehachse der Nabe (10) festgelegt ist.

2. Lenkgeber nach Anspruch 1, **dadurch gekennzeichnet, daß** der Getriebeabschnitt eine kreisförmige Zahnung (24) aufweist, die mit dem Ritzel (30) kämmt.

3. Lenkgeber nach Anspruch 1 oder 2, **dadurch gekennzeichnet, daß** das Lagerbauteil (18) und/oder die Nabe (20) einen scheibenförmigen Abschnitt (12) aufweist, der in einer Ausnehmung oder Öffnung das Gehäuse (26) des Drehdämpfers (28) aufnimmt.

4. Lenkgeber nach Anspruch 3, **dadurch gekennzeichnet, daß** mit dem scheibenförmigen Abschnitt (20) des Lagerbauteils (18) ein Lagerzapfen (16) verbunden ist, auf dem die Nabe (10) drehbar gelagert ist.

5. Lenkgeberanordnung nach einem der Ansprüche 1 bis 4, **dadurch gekennzeichnet, daß** zwischen Nabe (10) und Lagerbauteil (18) eine Federanordnung angeordnet ist, durch die die Nabe (10) in eine Neutralstellung vorgespannt ist.

6. Lenkgeberanordnung nach Anspruch 5, **dadurch gekennzeichnet, daß** eine einzige koaxial zur Drehachse angeordnete Schraubenfeder (30) vorgesehen ist, deren Schenkelenden (34, 36) mit einem Vorsprung (32) des Lagerbauteils zusammenwirken und die Nabe (10) einen Mitnehmerabschnitt aufweist, der je nach Drehrichtung der Nabe (10) mit einem der Schenkelenden (34, 36) zusammenwirkt.

7. Lenkgeberanordnung nach einem der Ansprüche 1 bis 6, **dadurch gekennzeichnet, daß** die Nabe (10) topfförmig ausgebildet ist und ein elektrisches Bauteil am scheibenförmigen Abschnitt der Nabe (10) angeordnet ist, das mit einem stationären Bauteil einen Winkelgeber bildet.

8. Lenkgeberanordnung nach einem der Ansprüche 1 bis 7, **dadurch gekennzeichnet, daß** der Drehwinkel der Nabe (10) auf weniger als 360° begrenzt ist, vorzugsweise auf 100° zu jeder Seite der Neutralstellung.

9. Lenkgeberanordnung nach einem der Ansprüche 1 bis 8, **dadurch gekennzeichnet, daß** das Lenkelement bzw. die Nabe (10) in der Neutralstellung blockierbar ausgebildet ist.
